# EUROPÄISCHE PATENTSCHRIFT

(11) **EP 3 074 540 B1**
(45) Veröffentlichungstag und Bekanntmachung des Hinweises auf die Patenterteilung: **06.05.2020**
(21) Anmeldenummer: 14803132.1
(22) Anmeldetag: 27.11.2014
(51) Int. Cl.: C21B 3/04, C21B 3/06

(54) **VERFAHREN ZUM BEARBEITEN VON ENTSCHWEFELUNGSSCHLACKE**
METHOD FOR TREATING DESULFURIZATION SLAG
PROCÉDÉ DE TRAITEMENT DE SCORIES DE DÉSULFURATION

(30) Priorität: 28.11.2013 DE 102013113197
(43) Veröffentlichungstag der Anmeldung: 05.10.2016
(73) Patentinhaber: Voestalpine Stahl GmbH, 4020 Linz (AT)
(72) Erfinder: PILZ, Karl, 4284 Tragwein (AT); FRITZ, Bertram, 4052 Ansfelden (AT); ANTREKOWITSCH, Jürgen, 8700 Leoben (AT); SCHNEEBERGER, Gerald, 8600 Bruck a. d. Mur (AT)
(74) Vertreter: HGF Europe LLP
(86) Internationale Anmeldenummer: PCT/EP2014/075771
(87) Internationale Veröffentlichungsnummer: WO 2015/078951

(56) Entgegenhaltungen:
- DE-A1- 2 005 315
- FR-A- 1 066 261
- FR-A- 2 297 914
- FR-A1- 2 431 538
- JP-A- 2013 087 290
- JP-A- 2013 189 688

## Beschreibung

Die Erfindung betrifft ein Verfahren zum Bearbeiten von Entschwefelungsschlacke nach dem Oberbegriff des Anspruchs 1.

Roheisen, wie es im Hochofen gewonnen wird, enthält üblicherweise 0,03 % bis 0,2 % Schwefel. Diese Schwefelgehalte sind unerwünscht und werden vor der Weiterverarbeitung, je nach Verwendungszweck des aus dem Roheisen zu erzeugenden Stahles, durch verschiedene Entschwefelungsverfahren stark reduziert. Bei dieser Roheisenentschwefelung fallen große Mengen an schwefelhaltiger Schlacke an, die aufgrund der Vermengungen mit Roheisen beim Abschlackvorgang eine erhebliche Menge Eisen enthält. Der Anfall an verbrauchter, eisenhaltiger Entschwefelungsschlacke aus der Roheisenentschwefelung eines großen Hochofens mit einer Tagesproduktion von 10.000 t Roheisen beträgt etwa 300 t täglich. Die Rückgewinnung des Eisens aus der Schlacke ist hierbei arbeitsaufwändig und relativ teuer. Da große Mengen sulfidhaltiger Schlacken nicht ohne weiteres deponiert werden können, ist beispielsweise aus der DE 38 37 249 A1 ein nasschemisches Aufbereitungsverfahren bekannt. Hierbei ist von Nachteil, dass solche Verfahren sehr teuer sind.

Aus der EP 0 627 012 B1 ist ein Verfahren zur Entschwefelung von Eisenschmelzen bekannt, wobei die Entschwefelungsschlacke sowie rohstoffbedingte Verunreinigungen in einem kippbaren Niederschachtofen oder einem entsprechend adaptierten Elektroofen oder Pfannenofen durch Widerstandserhitzen der Schlacke mittels in die Schlacke eintauchender Elektroden auf eine Temperatur von 1.400°C bis 1.800°C gebracht wird und mit dieser flüssigen Schlacke die schwefelhaltige Eisenschmelze entschwefelt und entweder diskontinuierlich oder kontinuierlich unterhalb der Entschwefelungsschlacke abgegossen wird, wobei das Verhältnis Eisenschmelze zu Schlacke den Wert 10:1 nicht überschreiten darf und die Entschwefelungsschlacke kontinuierlich oder diskontinuierlich regeneriert wird. Hierbei soll der Schwefel aus der Entschwefelungsschlacke mittels Luft, Sauerstoff, Wasser bzw. Wasserdampf, Eisenoxid, Eisenerz bzw. Manganerz erfolgen.

Aus der AT 406 689 B ist ein Verfahren zur Regeneration von Entschwefelungsschlacke bekannt, wobei flüssiges Roheisen und flüssige Entschwefelungsschlacke in einem Behandlungsgefäß in Kontakt gebracht werden und das flüssige Roheisen entschwefelt wird, das entschwefelte flüssige Roheisen größtenteils aus dem Behandlungsgefäß abgegossen wird, wobei die gesamte Entschwefelungsschlacke flüssig im Behandlungsgefäß verbleibt, die flüssige Entschwefelungsschlacke durch Behandlung mit gasförmigen Oxidationsmitteln regeneriert und das dabei entstehende SO₂ aus der Entschwefelungsschlacke entfernt wird und unter Verwendung einer Tauchglocke das SO₂-haltige Abgas unter Vermeidung von Umweltbelastung kostensparend abgeführt werden kann.

Aus der FR 2297914 ist ein Verfahren zum Entschwefeln von Roheisen bekannt.

Aus der FR 1.066.261 betrifft ein Verfahren bei dem eine Schmelze durch ein Gasaufblasverfahren entschwefelt werden soll.

Aus der JP 2013189688A ist ein Verfahren bekannt zum Entfernen von Schwefel aus einer Entschwefelungsschlacke, um die Entschwefelungsschlacke eines Entschwefelungsverfahrens für flüssiges Eisen der Art eines Recyclings zu nutzen.

Hierbei wird einer Temperatur zwischen 1100 und 1400 Grad Celsius der CO zu CO2 Verhältnis in der Atmosphäre so eingestellt, dass ein bestimmter Sauerstoffpartialdruck erreicht wird. Hierdurch wird SOx welches dann gasförmig abgezogen wird. Die so entschwefelte Schlacke soll als Kalkquelle zurückgeführt werden.

Bei der Aufbereitung von Entschwefelungsschlacke entstehen drei Fraktionen, grobstückige Schlacke, sogenanntes Bröckeleisen mit 10 mm bis 250 mm und Feineisen mit 0 mm bis 10 mm. Das grobstückige Eisen wird an Elektrostahlwerke verkauft, das Bröckeleisen wird in die Hochöfen zurückgeführt, wobei das Feineisen zu einem Teil in die Eisenerzsinteranlage geführt wird.

Dieses übliche Vorgehen in Stahlwerken führt jedoch einen Großteil des Schwefels wieder zurück in den Prozess, was eigentlich vermieden werden soll. Insbesondere werden durch den Wiedereinsatz der Schlacke ganz erhebliche Mengen an Schwefel in die Roheisenerzeugung zurückgeführt. Nachteilig ist hierbei, dass es im gesamten Verfahrenskreislauf keine Senke gibt, um den Schwefel gezielt auszuschleusen.

Insgesamt werden Teilmengen von Entschwefelungsschlacken europaweit in den Sinteranlagen verwertet oder z. B. als Geländeaufschüttung oder Lärmschutzwälle eingesetzt, ein hoher Anteil wird jedoch immer noch deponiert wie bspw. im IRC Reference Report Best Available Techniques (BAT) Reference Document for Iron and Steel Production vom März 2012 angeführt.

Aufgabe der Erfindung ist es, ein Verfahren zum Behandeln von Entschwefelungsschlacken zu schaffen, mit welchem Deponierungsprobleme vermieden werden, die Entschwefelung insgesamt ökonomischer durchgeführt wird und kein Schwefelkreislauf bei der Roheisenerzeugung provoziert wird.

Die Aufgabe wird mit einem Verfahren mit den Merkmalen des Anspruchs 1 gelöst. Vorteilhafte Weiterbildungen sind in den Unteransprüchen gekennzeichnet.

Erfindungsgemäß hat sich herausgestellt, dass eine Wiederverwendung der Schlacke im Roheisenprozess aufgrund ihres hohen Eisengehaltes trotzdem nur dann ökonomisch und prozesstechnisch sinnvoll ist, wenn der Schwefel aus der Schlacke weitestgehend entfernt werden kann. Hierzu wurde erfindungsgemäß herausgefunden, dass die starke Bindung des Schwefels in der Schlacke vornehmlich als Kalziumsulfid aufgebrochen werden muss. Gemäß der Erfindung gelingt dies nur in einem relativ engen Prozessfenster, weil nur innerhalb dieses Prozessfensters der in der Schlacke sehr stark eingebundene Schwefel wieder nahezu komplett gasförmig freigesetzt werden kann. Die bekannten Röstverfahren sind aufgrund der beim erfindungsgemäßen Verfahren geforderten hohen Prozesstemperatur hierbei nicht geeignet.

Hierbei ist von Vorteil, dass die Schlacke einerseits im Hochofenprozess wiederverwendet werden kann, um ihren erheblichen Eisenanteil sinnvoll zu nutzen, andererseits jedoch der Schwefel aus der Schlacke so zuverlässig ausgetrieben wird, dass das entstehende Röstgas zur Herstellung von Schwefelsäure verwendet werden kann, welche ebenfalls eine sehr große technische Bedeutung hat und für welche eine entsprechende Nachfrage besteht.

Die Erfindung wird anhand einer Zeichnung beispielhaft erläutert. Es zeigen dabei:

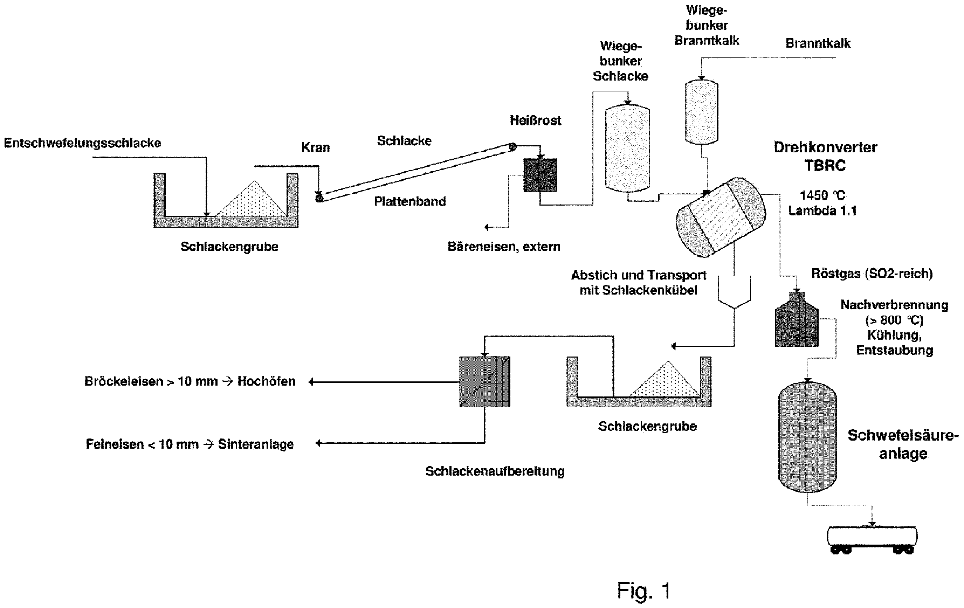

- Figur 1:: den Verfahrensablauf;

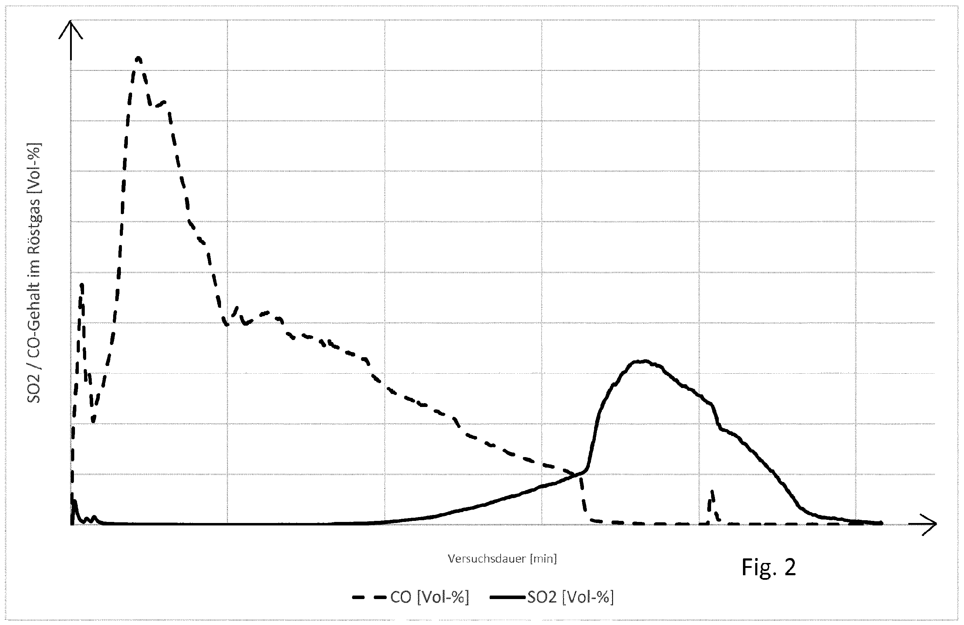

- Figur 2:: den Zusammenhang zwischen der Freisetzung von CO und SO₂;
- Figur 3:: die Auswirkung der Beimengung von Branntkalk für den Schmelzpunkt der Schlacke.

Erfindungsgemäß wird die Entschwefelungsschlacke auf Temperaturen größer 1.400°C erhitzt. Bei niedrigeren Entschwefelungstemperaturen wird das Materialhandling durch Agglomeration deutlich erschwert. Erfindungsgemäß wird der Prozess in einem Aggregat, welches eine ausreichende Turbulenz und damit Durchmischung ermöglicht, insbesondere in einem so genannten Drehkonverter (TBRC-Top Blown Rotary Converter) oder einem Kurztrommelofen durchgeführt. Hierbei wird eine oxidierende Atmosphäre verwendet und der Schwefel wird als SO₂-Röstgas freigesetzt. Um den Brenner des Drehkonverters unabhängig vom Sauerstoffbedarf des Röstvorganges betreiben zu können, kann der Reaktionssauerstoff über eine eigene Lanze zugeführt werden.

Erfindungsgemäß wird die Schlacke so lange bearbeitet, bis kein SO₂-Röstgas mehr freigesetzt wird, wobei durch den Drehkonverter eine gute Homogenisierung sichergestellt ist. Der λ-Wert des Brenners wird beim Einschmelzen der Schlacke bevorzugt auf 1,3 - 1,6, vorzugsweise 1,4 - 1,5, eingestellt. Der Sauerstoffüberschuss ist notwendig um den Kohlenstoff, der in der Roheisenfraktion der Schlacke enthalten ist, rasch zu CO und CO₂ umzusetzen. Ansonsten setzt sich das aufgrund des vorhandenen Kohlenstoffes niedrig schmelzende Roheisen (Schmelzpunkt It. Eisen-Kohlenstoffdiagramm von rd. 1.200°C) rasch als Eisenregulus ab, und bildet eine separate Phase. Für die eigentliche Röstung (Freisetzen des in der Schlacke gebundenen Schwefels als SO₂) wird der λ-Wert des Brenners vorzugsweise auf > 2,0 eingestellt, um einen ausreichenden Sauerstoffüberschuss zu gewährleisten.

Anhand der Abgaskomponenten CO und SO₂ bzw. deren Anteil im Abgas kann der optimale λ-Wert des Prozesses eingestellt werden. Zudem kann der Umstellzeitpunkt durch das Abklingen der CO-Konzentration und das Ansteigen der SO₂-Konzentration bestimmt werden und dementsprechend auch der λ-Wert umgestellt werden.

Vorteilhafterweise kann für die Regelung des Prozesses eine übliche Abgasmessung bzw. Abgasanalytik verwendet werden um die Regelung zu optimieren.

Das erfindungsgemäß verwendete Aggregat ermöglicht hierbei eine optimale, einfache Chargierung, wobei, wenn es notwendig ist, die Durchmischung der flüssigen Schlacke dadurch verbessert werden kann, dass die Turbulenz durch stärkere Drehbewegung erhöht wird.

In einer bevorzugten Ausführungsform wird die Schlacke nicht in kaltem Zustand sondern mit einer möglichst hohen Restwärme dem Aggregat zugeführt um die Freisetzung der Gase zu beschleunigen.

Zudem ist es insbesondere bei Verwendung eines TBRC möglich, relativ kleine Chargen zu bearbeiten, wobei sowohl der Luftüberschuss als auch die Wärmezufuhr durch den Sauerstoff/Erdgasbrenner optimal eingestellt werden kann.

Um die Schlacke flüssig zu halten und einen schmelzflüssigen Abstich zu gewährleisten, wird Erfindungsgemäß bis zu 20 % Branntkalk dem Aggregat bzw. der Schlacke im Aggregat zugesetzt werden.

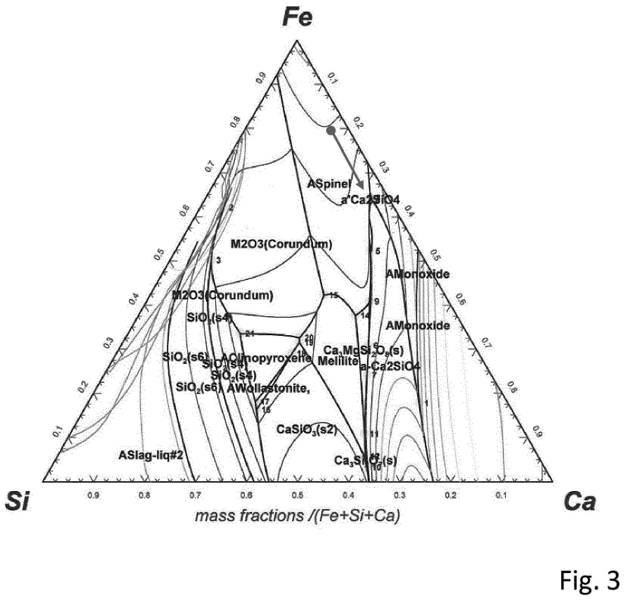

Die notwendige Beimischung kann aus Fig. 3 entnommen werden, dies ist abhängig von der Zusammensetzung der Schlacke. Das entstehende CO-haltige Abgas wird nachverbrannt, wobei das stark SO₂-haltige Abgas anschließend in bekannter Weise der Schwefelsäureherstellung zugeführt wird.

In einem erfindungsgemäßen Ausführungsbeispiel gelangt Entschwefelungsschlacke mit entsprechenden Transporteinrichtungen 1 in eine Schlackengrube 2, in der die Entschwefelungsschlacke in heißem Zustand gelagert wird. Mittels einer entsprechenden Krananlage (nicht gezeigt) wird die Schlacke auch immer mittels eines Plattenbandes 3 über einen Heißrost vorsortiert. Vom Heißrost 4 gelangt die Schlacke in einen Wiegebunker 5 und von dem Wiegebunker 5 in den Drehkonverter 6. Über einen weiteren Wiegebunker 7, der Branntkalk enthält, kann entsprechend Branntkalk dem Drehkonverter zu chargiert werden. Im Drehkonverter wird die Schlacke mit dem Branntkalk bei mehr als 1.400°C, insbesondere 1.450°C, für 0,5 bis 2 Stunden behandelt, je nachdem zu welchem Zeitpunkt die Freisetzung von SO₂ Röstgas abgeschlossen ist. Der λ-Wert des Brenners wird beim Einschmelzen der Schlacke bevorzugt auf 1,4 - 1,5 eingestellt. Der Sauerstoffüberschuss ist notwendig um den Kohlenstoff, der in der Roheisenfraktion der Schlacke enthalten ist, rasch zu CO und CO₂ umzusetzen. Ansonsten setzt sich das aufgrund des vorhandenen Kohlenstoffes niedrig schmelzende Roheisen (Schmelzpunkt It. Eisen-Kohlenstoffdiagramm von rd. 1.200°C) rasch als Eisenregulus ab, und bildet eine separate Phase. Für die eigentliche Röstung (Freisetzen des in der Schlacke gebundenen Schwefels als SO₂) wird der λ-Wert des Brenners vorzugsweise auf > 2,0 eingestellt, um einen ausreichenden Sauerstoffüberschuss zu gewährleisten. Anschließend erfolgt der Abstich, wobei die abgestochene Schlacke über Schlackenkübel 8 einer weiteren Schlackengrube 9 zugeführt wird, und von der Schlackengrube 9 in eine Schlackenaufbereitung 10 gelangt, in der die Schlacke in die Fraktion > 10 mm (Bröckeleisen) und in eine Fraktion < 10 mm (Feineisen) unterteilt wird. Hierbei wird das Bröckeleisen für die Weiterverarbeitung im Hochofen verwendet, während das Feineisen der Sinteranlage zugeführt wird.

Das Röstgas wird vom Drehkonverter in eine Nachverbrennungseinrichtung 11 weitergeführt und in dieser Nachverbrennungseinrichtung nachverbrannt, anschließend bevorzugt auf etwa 400°C bis 500°C gekühlt und entstaubt und der Schwefelsäureanlage 12 zugeführt.

Bei dem erfindungsgemäßen Verfahren ist von Vorteil, dass die Entschwefelungsschlacke entschwefelt und dieser Schwefel einer Verwertung als Schwefelsäure zugeführt wird. Dadurch kann der Schwefel aus der Roheisenerzeugung ausgeschleust werden.

Eine erfindungsgemäß behandelte Schlacke weist einen gesicherten Schwefelgehalt von unter 0,1 Masse-%, meist sogar von < 0,01 Masse-%, bezogen auf das Gewicht der Schlacke auf und liefert daher beim Rückführen in die Roheisenerzeugung eine Schwefelfracht, die vernachlässigbar ist.

Des Weiteren ist dieses Verfahren vor allem für ein integriertes Hüttenwerk von Vorteil, da zusätzlich zur Entschwefelung auch das Eisen vollständig intern verwertet werden und direkt der Roheisenerzeugung zugeführt werden kann.

Zudem können Deponien und Zwischenlager, welche sehr teuer sind, vermieden werden, wobei ein Aspekt ist, dass der Schwefeleintrag in der Roheisenerzeugung deutlich verringert wird. Durch die Schwefelsäureproduktion wird im internen Kreislauf eine Schwefelsenke erzielt. Die erzeugte Schwefelsäure ist hierbei ein wertvolles Kuppelprodukt.

## Patentansprüche

1. Verfahren zum Behandeln von Entschwefelungsschlacke, wobei Entschwefelungsschlacke aus der Roheisenentschwefelung einem geeigneten Aggregat zugeführt wird, indem die Entschwefelungsschlacke bei mindestens 1.400°C verflüssigt wird, wobei das Aggregat eine Durchmischung sicherstellt und die Behandlung in dem Aggregat bei oxidierenden Bedingungen stattfindet, wobei das entstehende SO₂ aus dem Röstgas aufgefangen und der weiteren Verwertung zugeführt wird, wobei der Entschwefelungsschlacke in dem Aggregat (6) Branntkalk zugesetzt wird, wobei der λ-Wert des Brenners beim Einschmelzen der Schlacke auf 1,3 - 1,6, eingestellt wird und für die eigentliche Röstung zur Freisetzung des in der Schlacke gebundenen Schwefels als SO₂ der λ-Wert des Brenners auf > 2,0 eingestellt wird, wobei bis 20% Branntkalk zugesetzt werden.

2. Verfahren nach Anspruch 1, **dadurch gekennzeichnet, dass** neben dem SO₂ aus dem Röstgas zusätzlich auch die behandelte Schlacke abgestochen und in die Roheisenerzeugung zurückgeführt wird.

3. Verfahren nach Anspruch 1, **dadurch gekennzeichnet, dass** die behandelte Schlacke mit einem Schwefelgehalt von unter 0,1 Masse-%, in die Roheisenerzeugung zurückgeführt wird.

4. Verfahren nach Anspruch 1, **dadurch gekennzeichnet, dass** die Schlacke bei mehr als 1.400°C behandelt wird.

5. Verfahren nach einem der vorhergehenden Ansprüche, **dadurch gekennzeichnet, dass** als Aggregat ein Drehkonverter, wie besipielsweise ein Top Blown Rotary Converter oder kurz TBRC, eingesetzt wird.

6. Verfahren nach Anspruch 5, **dadurch gekennzeichnet, dass** der Reaktionssauerstoff im Drehkonverter über eine eigene Lanze zugeführt wird, um den Brenner des Drehkonverters unabhängig vom Sauerstoffbedarf des Röstvorganges betreiben zu können.

7. Verfahren nach einem der vorhergehenden Ansprüche, **dadurch gekennzeichnet, dass** das abgezogene SO₂ und CO enthaltende Röstgas einer Nachverbrennung mit Kühlung und Entstaubung unterworfen wird.

8. Verfahren nach einem der vorhergehenden Ansprüche, **dadurch gekennzeichnet, dass** das SO₂ enthaltende Röstgas einer Schwefelsäureanlage zugeführt wird.

9. Verfahren nach einem der vorhergehenden Ansprüche, **dadurch gekennzeichnet, dass** anhand des Verhältnisses der Abgaskomponenten CO und SO₂ im Abgas beim Einschmelzen der Schlacke und beim Rösten das optimale λ des Prozesses bzw. der Umstellzeitpunkt vom Einschmelzen zum Rösten eingestellt wird, wobei der λ-Wert des Brenners beim Einschmelzen der Schlacke auf 1,3 - 1,6, eingestellt wird, wobei beim Abklingen der CO-Konzentration während des Einschmelzens und beim Ansteigen der SO₂-Konzentration der λ-Wert auf den Wert für das Rösten > 2 erhöht wird.

10. Verfahren nach Anspruch 3, **dadurch gekennzeichnet, dass** die behandelte Schlacke mit einem Schwefelgehalt von unter 0,01 Masse-% in die Roheisenerzeugung zurückgeführt wird.

11. Verfahren nach Anspruch 4, **dadurch gekennzeichnet, dass** die Schlacke bei mehr als 1450°C behandelt wird.

12. Verfahren nach Anspruch 1, **dadurch gekennzeichnet, dass** der λ-Wert des Brenners beim Einschmelzen der Schlacke auf 1,4 bis 1,5 eingestellt wird und für eigentliche Röstung zur Freisetzung des in der Schlacke gebundenen Schwefels als SO₂ der λ-Wert des Brenner auf > 2,0 eingestellt wird.

## Claims

1. Method for treating desulphurisation slag, wherein desulphurisation slag is fed from pig iron desulphurisation to a suitable device while the desulphurisation slag liquefies at at least 1400°C wherein the device ensures intermixing and the treatment in the unit takes place under oxidising conditions, wherein the ensuing SO₂ is extracted from the roasting gas and fed further for later recovery, wherein burnt lime is added to the desulphurisation slag in the unit (6), wherein the λ-value of the burner is set at 1.3 - 1.6 while melting the slag and the λ-value of the burner is set > 2.0 for the actual roasting to release the sulphur bound in the slag in the form of SO₂, wherein up to 20% of burnt lime is added.

2. Method according to claim 1, **characterised in that**, in addition, besides the SO₂, the treated slag is also separated from the roasting gas and is fed into the pig iron production.

3. Method according to claim 1, **characterised in that** the treated slag is fed into the pig iron production with a sulphur content of less than 0.1 % w/w.

4. Method according to claim 1, **characterised in that** the slag is treated at over 1400°C.

5. Method according to any one of the preceding claims, **characterised in that** a rotary converter, such as a Top Blown Rotary Converter, abbreviated to TBRC, is used as a device.

6. Method according to claim 5, **characterised in that** the reaction oxygen in the rotary converter is fed by means of its own lance so as to be able to operate the burner of the rotary converter independent of the oxygen requirement for the roasting process.

7. Method according to any one of the preceding claims, **characterised in that** the roasting gas containing extracted SO₂ and CO is subjected to post combustion with cooling and dust removal.

8. Method according to any one of the preceding claims, **characterised in that** the roasting gas containing the SO₂ is fed to a sulphuric acid plant.

9. Method according to any one of the preceding claims, **characterised in that**, based on the relationship of the exhaust gas components CO and SO₂ in the exhaust gas when melting the slag and during roasting, the optimal λ of the process, or respectively the transition point from melting to roasting is adjusted, wherein the λ-value of the burner when melting the slag is set at 1.3 - 1,6, wherein, during the subsiding of the CO concentration during the melting and during the rise in the SO₂ concentration, the λ-value is raised to the value for roasting, i.e. > 2.

10. Method according to claim 3, **characterised in that** the treated slag is returned to the pig iron production with a sulphur content of less than 0.01 % w/w.

11. Method according to claim 4, **characterised in that** the slag is treated at over 1450°C.

12. Method according to claim 1, **characterised in that** the λ-value of the burner when melting the slag is set at 1.4 to 1.5 and, for actual roasting to release the sulphur bound in the slag as SO₂, the λ-value of the burner is set higher, i.e. >2.0.

## Revendications

1. Procédé de traitement de scories de désulfuration, les scories de désulfuration de la désulfuration de la fonte brute étant apportées à un agrégat adapté dans lequel les scories de désulfuration sont liquéfiées à au moins 1 400 °C, l'agrégat assurant un mélange et le traitement dans l'agrégat a lieu dans des conditions oxydantes, le SO₂ produit étant recueilli à partir de gaz de torréfaction et étant dirigé vers l'valorisation ultérieure, les scories de désulfuration étant rajoutées dans l'agrégat (6) à de la chaux vive, la valeur λ du brûleur étant réglée sur 1,3 - 1,6 à la fusion des scories et la valeur λ du brûleur étant réglée sur > 2,0 pour la torréfaction en vue de la libération du soufre lié dans les scories en tant que SO₂, jusqu'à 20 % de chaux vive étant ajoutés.

2. Procédé selon la revendication 1, **caractérisé en ce qu'**outre le SO₂ provenant du gaz de torréfaction les scories traitées sont également soutirées et ramenées dans la production de la fonte brute.

3. Procédé selon la revendication 1, **caractérisé en ce que** les scories traitées sont ramenées dans la production de la fonte brute avec une teneur en soufre inférieure à 0,1 % de la masse.

4. Procédé selon la revendication 1, **caractérisé en ce que** les scories sont traitées à plus de 1 400 °C.

5. Procédé selon l'une des revendications précédentes, **caractérisé en ce qu'**un convertisseur rotatif, par exemple, un Top Blown Rotary Converter ou en abrégé TBRC, est utilisé comme un agrégat.

6. Procédé selon la revendication 5, **caractérisé en ce que** l'oxygène après réaction dans le convertisseur rotatif est amenée par une lance dédiée pour pouvoir exploiter le brûleur du convertisseur rotatif quel que soit le besoin en oxygène du processus de torréfaction.

7. Procédé selon l'une des revendications précédentes, **caractérisé en ce que** le gaz de torréfaction extrait contenant du CO et du SO₂ est soumis à une postcombustion avec un refroidissement et un dépoussiérage.

8. Procédé selon l'une des revendications précédentes, **caractérisé en ce que** le gaz de torréfaction contenant du SO₂ est alimenté à une installation d'acide sulfurique.

9. Procédé selon l'une des revendications précédentes, **caractérisé en ce que** le A optimal du processus ou le moment du changement de la fusion à la torréfaction est réglé au moyen du rapport des composants de gaz d'échappement CO et SO₂ dans le gaz d'échappement à la fusion des scories et à la torréfaction, la valeur λ du brûleur étant réglée sur 1,3 - 1,6 à la fusion des scories,
la valeur λ étant portée à la valeur pour la torréfaction > 2 quand la concentration de CO retombe pendant la fusion et quand la concentration en SO₂ augmente.

10. Procédé selon la revendication 3, **caractérisé en ce que** les scories traitées sont ramenées dans la production de la fonte brute avec une teneur en soufre inférieure à 0,01 % de la masse.

11. Procédé selon la revendication 4, **caractérisé en ce que** les scories sont traitées à plus de 1450 °C.

12. Procédé selon la revendication 1, **caractérisé en ce que** la valeur λ du brûleur est réglée sur 1,4 à 1,5 à la fusion des scories et la valeur λ du brûleur est réglée sur > 2,0 pour la torréfaction en vue de la libération du soufre lié dans les scories en tant que SO₂.
